# EUROPEAN PATENT APPLICATION

(11) **EP 2 251 923 A1**
(43) Date of publication of application: **17.11.2010**
(21) Application number: 09713257.5
(22) Date of filing: 19.02.2009
(51) Int. Cl.: H01M 8/02, H01M 4/86, H01M 4/88, H01M 4/96, H01M 8/10

(54) **METHOD FOR MANUFACTURING MEMBRANE ELECTRODE ASSEMBLY FOR SOLID POLYMER FUEL CELL**

(30) Priority: 22.02.2008 JP 2008042102
(71) Applicant: Asahi Glass Company, Limited, Chiyoda-ku Tokyo 100-8405 (JP)
(72) Inventor: TANUMA, Toshihiro, Tokyo 100-8405 (JP)
(74) Representative: Müller-Boré & Partner Patentanwälte
(86) International application number: PCT/JP2009/052935
(87) International publication number: WO 2009/104701

(57) **Abstract**

Provision of a process for producing a membrane/electrode assembly for a polymer electrolyte fuel cell which can produce a high output voltage in a wide current density range.

A process for producing a membrane/electrode assembly for a polymer electrolyte fuel cell, comprising an anode and a cathode each having a catalyst layer, and an electrolyte membrane interposed between the catalyst layer of the anode and the catalyst layer of the cathode;
said process comprising:
a gas diffusion layer-forming step of applying a gas diffusion layer-coating fluid containing carbon fibers having a fiber diameter of from 1 µm to 50 µm and a proton conductive polymer, on a substrate to form a gas diffusion layer;
a removal step of removing the substrate from the gas diffusion layer formed in the gas diffusion layer-forming step; and
a step of disposing at least one such a gas diffusion layer thus prepared, on a surface of the catalyst layer of at least one of the anode and the cathode, on which the electrolyte membrane is not disposed.

## Description

### TECHNICAL FIELD

The present invention relates to a process for producing a membrane/electrode assembly for a polymer electrolyte fuel cell.

### BACKGROUND ART

Fuel cells using only hydrogen and oxygen and producing only water as a reaction product in principle, are focus of attention as power generation systems providing little adverse affect on the environment. Among them, in recent years, polymer electrolyte fuel cells each employing a proton conductive ion exchange membrane (polymer electrolyte membrane) as an electrolyte, are considered as prospective for automotive applications since they have low operation temperature, high power density and possibility of downsizing.

A polymer electrolyte fuel cell comprises a membrane/electrode assembly comprising a polymer electrolyte membrane and electrodes (anode (fuel electrode) and a cathode (air electrode)) disposed on respective sides of the polymer electrolyte membrane; and separators each having a surface in which gas flow paths formed. The electrodes are usually each constituted by a catalyst layer in contact with the polymer electrolyte membrane and a gas diffusion layer disposed on the outer side of the catalyst layer. The gas diffusion layer has a function of diffusing air or fuel in the electrode, and a function of discharging water generated in the electrode.

A polymer electrolyte fuel cell is usually produced by disposing a membrane/electrode assembly between two separators to form a cell and stacking a plurality of such cells.

Such a polymer electrolyte fuel cell has a feature that its operation temperature is low (50 to 120°C), but it also has a demerit that its exhaust heat is hard to be used efficiently for e.g. auxiliary power. In order to compensate this demerit, polymer electrolyte fuel cells are demanded to have high utilization rate of hydrogen and oxygen, that is, high energy efficiency and high power density.

In order for such a polymer electrolyte fuel cell to satisfy the above demand, among components constituting such a polymer electrolyte fuel cell, a membrane/electrode assembly is particularly important.

Heretofore, a catalyst layer of an electrode has been produced by employing a catalyst powder for promoting an electrode reaction, and a viscous mixture prepared by dissolving or dispersing a proton conductive polymer to increase conductivity and to prevent flooding of a porous body due to condensation of water vapor, in a solvent of an alcohol such as ethanol.

As processes for producing such a membrane/electrode assembly, the following processes (1) to (3) may, for example, be mentioned.
(1) A process of directly applying the above viscous mixture on surfaces of a polymer electrolyte membrane, or applying such a mixture on a separate sheet-shaped substrate to form a catalyst layer and transferring or bonding such a catalyst layer onto each surface of a polymer electrolyte membrane, to form a catalyst layer/polymer electrolyte membrane/catalyst layer assembly; and disposing a porous conductive material such as a carbon paper or carbon cloth as a gas diffusion layer on each side of the assembly.
(2) A process of directly applying the above viscous mixture on the gas diffusion layer to form a catalyst layer thereby to form a catalyst layer/gas diffusion layer assembly, and disposing such an assembly on each side of a polymer electrolyte membrane so that the catalyst layer contacts with the polymer electrolyte membrane.
(3) A process of applying the above viscous mixture on a substrate to form a catalyst layer, laminating e.g. a carbon paper directly on the catalyst layer by hot pressing to form an electrode, and bonding such an electrode on each side of a polymer electrolyte membrane by e.g. hot pressing (refer to e.g. Patent Document 1).
   Patent Document 1: JP-A-2001-283864

### DISCLOSURE OF THE INVENTION

### PROBLEMS TO BE SOLVED BY THE INVENTION

However, membrane/electrode assemblies obtained by the above processes are not always satisfactory in terms of properties, such as gas diffusion property of electrode, conductivity, water repellent property, durability, etc. For example, membrane/electrode assemblies obtained by the above process (1) have such a problem that adhesion between the gas diffusion layer and the catalyst layer is insufficient. Further, a membrane/electrode assemblies obtained by the above process (2) have such a problem that pores of the gas diffusion layer are clogged at a time of forming the catalyst layer, deteriorating the gas diffusion property. Further, membrane/electrode assemblies obtained by the above process (3) have such a problem that the catalyst layer and the gas diffusion layer are deformed by a pressure at a time of hot pressing, deteriorating the gas diffusion property. Further, in these methods, materials to be employed for the gas diffusion layer are expensive, and there is a problem of production cost.

Further, heretofore, a polymer electrolyte fuel cell employing such a membrane/electrode assembly does not have sufficiently satisfactory properties, and particularly, it is difficult for such a polymer electrolyte fuel cell to obtain high output voltage in a wide current density range.

It is an object of the present invention to provide a process for producing a membrane/electrode assembly for a polymer electrolyte fuel cell producing high output voltage in a wide current density range.

### MEANS FOR SOLVING THE PROBLEMS

In order to solve the above problems, the present invention employs the following constructions.
[1] A process for producing a membrane/electrode assembly for a polymer electrolyte fuel cell, comprising an anode and a cathode each having a catalyst layer, and an electrolyte membrane interposed between the catalyst layer of the anode and the catalyst layer of the cathode;
   said process comprising:
   a gas diffusion layer-forming step of applying a gas diffusion layer-coating fluid containing carbon fibers having a fiber diameter of from 1 µm to 50 µm and a proton conductive polymer, on a substrate to form a gas diffusion layer;
   a removal step of removing the substrate from the gas diffusion layer formed in the gas diffusion layer-forming step; and
   a step of disposing at least one such a gas diffusion layer thus prepared, on a surface of the catalyst layer of at least one of the anode and the cathode, on which the electrolyte membrane is not disposed.
[2] A process for producing a membrane/electrode assembly for a polymer electrolyte fuel cell comprising an anode and a cathode each having a catalyst layer, and an electrolyte membrane interposed between the catalyst layer of the anode and the catalyst layer of the cathode, wherein at least one of the anode and the cathode has a gas diffusion layer (1) and a gas diffusion layer (2);
   said process comprising:
   a gas diffusion layer (1)-forming step of applying a gas diffusion layer (1)-coating fluid containing carbon fibers having a fiber diameter of from 1 µm to 50 µm and a proton conductive polymer, on a substrate, to form the gas diffusion layer (1);
   a removal step of removing the substrate from the gas diffusion layer (1) formed in the gas diffusion layer (1)-forming step;
   a gas diffusion layer (2)-forming step of applying a gas diffusion layer (2)-coating fluid containing carbon fibers having a fiber diameter of at least 1 nm and less than 1,000 nm and a proton conductive polymer, on a surface of the gas diffusion layer (1) from which the substrate is removed, to form the gas diffusion layer (2);
   a catalyst layer-forming step of applying a catalyst layer-coating fluid containing a catalyst and a proton conductive polymer, on the electrolyte membrane, to form each catalyst layer; and
   a bonding step of bonding the catalyst layer formed in the catalyst layer-forming step with the gas diffusion layer (2).
[3] A process for producing a membrane/electrode assembly for a polymer electrolyte fuel cell comprising an anode and a cathode each having a catalyst layer, and an electrolyte membrane interposed between the catalyst layer of the anode and the catalyst layer of the cathode, wherein at least one of the anode and the cathode has a gas diffusion layer (1) and a gas diffusion layer (2);
   said process comprising:
   a gas diffusion layer (2)-forming step of applying a gas diffusion layer (2)-coating fluid containing carbon fibers having a fiber diameter of at least 1 nm and less than 1,000 nm and a proton conductive polymer, on a substrate, to form the gas diffusion layer (2);
   a gas diffusion layer (1)-forming step of applying a gas diffusion layer (1)-coating fluid containing carbon fibers having a fiber diameter of from 1 µm to 50 µm and a proton conductive polymer, on the gas diffusion layer (2), to form the gas diffusion layer (1);
   a removal step of removing the substrate from the gas diffusion layer (2) formed in the gas diffusion layer (2)-forming step;
   a catalyst layer-forming step of applying a catalyst layer-coating fluid containing a catalyst and a proton conductive polymer, on the electrolyte membrane, to form each catalyst layer; and
   a bonding step of bonding the catalyst layer formed in the catalyst layer-forming step with the gas diffusion layer (2).
[4] The process for producing a membrane/electrode assembly for a polymer electrolyte fuel cell according to the above [1]; said polymer electrolyte fuel cell comprising an anode and a cathode each having a catalyst layer, and an electrolyte membrane interposed between the catalyst layer of the anode and the catalyst layer of the cathode, wherein at least one of the anode and the cathode has a gas diffusion layer (1) and a gas diffusion layer (2);
   said process comprising:
   a gas diffusion layer (1)-forming step of applying a gas diffusion layer (1)-coating fluid containing carbon fibers having a fiber diameter of from 1 µm to 50 µm and a proton conductive polymer, on a substrate, to form the gas diffusion layer (1);
   a removal step of removing the substrate from the gas diffusion layer (1) formed in the gas diffusion layer (1)-forming step;
   a catalyst layer-forming step of applying a catalyst layer-coating fluid containing a catalyst and a proton conductive polymer, on the electrolyte membrane, to form each catalyst layer;
   a gas diffusion layer (2)-forming step of applying a gas diffusion layer (2)-coating fluid containing carbon fibers having a fiber diameter of at least 1 nm and less than 1,000 nm and a proton conductive polymer, on at least one of the catalyst layers formed in the catalyst layer-forming step, to form the gas diffusion layer (2); and
   a bonding step of bonding the gas diffusion layer (1) with the gas diffusion layer (2).

### EFFECTS OF THE INVENTION

By the present invention, it is possible to produce a membrane/electrode assembly for a polymer electrolyte fuel cell producing a high output voltage in a wide current density range.

### BRIEF EXPLANATION OF THE DRAWINGS

Fig. 1 is a schematic cross sectional view showing an example of a membrane/electrode assembly in a polymer electrolyte fuel cell.
Fig. 2 is a view for explaining an example of the process for producing a membrane/electrode assembly for a polymer electrolyte fuel cell of the present invention.
Fig. 3 is a view for explaining an example of the process for producing a membrane/electrode assembly for a polymer electrolyte fuel cell of the present invention.
Fig. 4 is a view for explaining an example of the process for producing a membrane/electrode assembly for a polymer electrolyte fuel cell of the present invention.
Fig. 5 is a view for explaining an example of the process for producing a membrane/electrode assembly for a polymer electrolyte fuel cell of the present invention.

### EXPLANATION OF NUMERALS

1: Membrane/electrode assembly, 10: anode, 12: catalyst layer, 14: gas diffusion layer, 20: cathode, 22: catalyst layer, 24: gas diffusion layer, 30: electrolyte membrane, 40: separator.

### BEST MODE FOR CARRYING OUT THE INVENTION

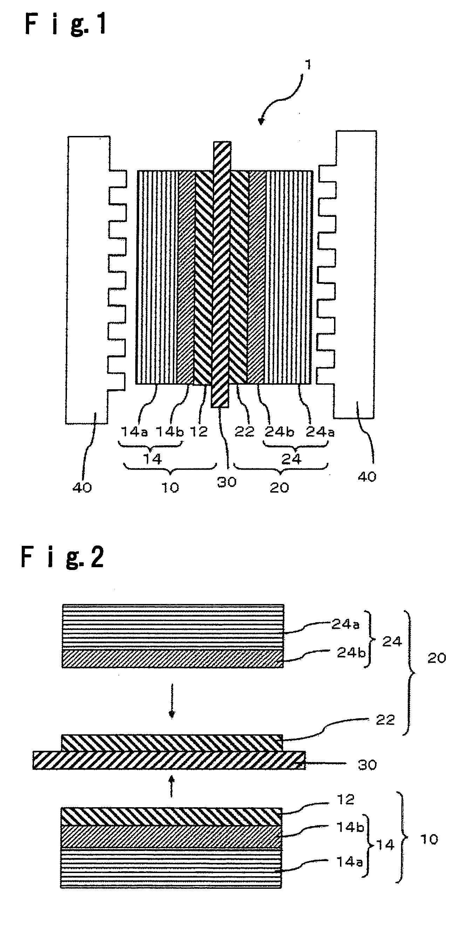

Fig. 1 is a schematic cross sectional view showing an example of a polymer electrolyte fuel cell employing a membrane/electrode assembly 1 produced by the production process of the present invention.

The membrane/electrode assembly 1 is composed of an anode 10, a cathode 20 and a polymer electrolyte membrane 30 interposed between them. The anode 10 is composed of a catalyst layer 12 and a gas diffusion layer 14, and the gas diffusion layer 14 has a plurality of gas diffusion sub layers that are a gas diffusion layer (1)14a and a gas diffusion layer (2)14b. Further, the catalyst layer 1 is in contact with the polymer electrolyte membrane 30. The cathode 20 is composed of a catalyst layer 22 and a gas diffusion layer 24, and the gas diffusion layer 24 has a plurality of gas diffusion sub layers that are a gas diffusion layer (1)24a and a gas diffusion layer (2)24b. Further, the catalyst layer 22 is in contact with the polymer electrolyte membrane 30.

The membrane/electrode assembly 1 is disposed between two separators 40 each having a surface in which flow paths for gas are formed, composing the polymer electrolyte fuel cell. In this construction, a gas diffusion layer (1)14a of the anode 10 and the gas diffusion layer (1)24a of the cathode 20, that are the outermost layers of the membrane/electrode assembly 1, are adjacent to respective separators 40, composing the polymer electrolyte fuel cell.

Now, embodiments of the process for producing a membrane/electrode assembly for a polymer electrolyte fuel cell of the present invention will be described.

### <First embodiment>

As a process for producing the membrane/electrode assembly 1 in this embodiment, a process having steps (1-1) to (1-4) is mentioned. This process is described with reference to Fig. 2.
Step (1-1): Gas diffusion layer 24-forming step
Step (1-2): Electrolyte membrane 30 with catalyst layer 22-forming step
Step (1-3): Anode 10-forming step
Step (1-4): Bonding step
Step (1-1): Gas diffusion layer 24-forming step

As the step (1-1), a step having the following steps (1-1-1) to (1-1-3) may be mentioned.

### Step (1-1-1): Gas diffusion layer (1)24a-forming step

This step is a step of applying a gas diffusion layer (1)-coating fluid containing carbon fibers having a fiber diameter of from 1 µm to 50 µm and a proton conductive polymer, on a substrate, and drying it to form a gas diffusion layer (1)24a.

The carbon fibers preferably have a fiber diameter of from 2 µm to 40 µm, more preferably from 3 µm to 20 µm in order to obtain a sufficient gas diffusion property in a gas diffusion layer. Such carbon fibers may, for example, be vapor grown carbon fibers, carbon nanotubes (single wall, double wall, multiwall, cup lamination type, etc.), chopped fibers or milled fibers. Among them, vapor grown carbon fibers, chopped fibers or milled fibers are preferred.

The fiber length of the carbon fibers is preferably from 5 µm to 10,000 µm, more preferably from 10 µm to 6,000 µm from the viewpoint of dispersion property of the carbon fibers in a coating fluid.

The proton conductive polymer is preferably a resin having an ion exchange capacity of from 0.5 to 2.0 meq/g-dry resin, it is particularly preferably a resin having an ion exchange capacity of from 0.8 to 1.5 meq/g-dry resin from the viewpoint of conductivity and gas permeability.

The proton conductive polymer may, for example, be a fluorinated proton conductive polymer or a non-fluorinated proton conductive polymer, and a fluorinated proton conductive polymer is preferred from the viewpoint of excellent durability for fuel cell application.

The fluorinated proton conductive polymer is preferably a perfluorocarbon polymer having sulfonic acid groups (which may contain an etheric oxygen atom), particularly preferably a copolymer containing polymerization units based on tetrafluoroethylene and polymerization units based on perfluorovinyl ether containing sulfonic acid groups. Such a copolymer is usually obtained by copolymerizing tetrafluoroethylene and a perfluorovinyl ether containing precursor groups of sulfonic acid groups (e.g. -SO₂F) to obtain a copolymer and hydrolyzing the copolymer to convert the precursor groups into acid form.

The perfluorovinyl ether having precursor groups of sulfonic acid groups, is preferably the following compound (1). Here, in this specification, a compound represented by formula (1) is designated as compound (1), and compounds represented by other formulae are also designated in the same manner.

CF₂=CF (OCF₂CFX)ₘ-Oₚ- (OF₂) ₙ-SO₂F (1)

wherein m is an integer of from 1 to 3, n is an integer of from 1 to 12, p is 0 or 1 and X is F or CF₃.

Compound (1) is preferably the following compounds (1-1) to (1-3).

CF₂=CFO(CF₂)_{q}SO₂F (1-1)

CF₂=CFOCF₂CF(CF₃)O(CF₂)ᵣSO₂F (1-2)

CF₂=CF(OCF₂CF(CF₃))ₜO(CF₂)ₛSO₂F (1-3)

wherein q, r and s are each independently an integer of from 1 to 8, and t is an integer of from 1 to 3.

Particularly, compound (1) is preferably a fluorinated proton conductive polymer from the viewpoints such as its good dispersing capability for carbon fibers and high adhesion with the catalyst layer.

The gas diffusion layer (1)-coating fluid contains carbon fibers and a proton conductive polymer with a mass ratio of carbon fiber:proton conductive polymer of preferably from 1:0.01 to 1:1.0, more preferably from 1:0.05 to 1:0.8, further preferably from 1:0.1 to 1:0.5. If the ratio of proton conductive polymer is lower than this range, dispersion of carbon fibers becomes insufficient, and adhesion of the gas diffusion layer (1) to adjacent layers becomes poor, whereby the gas diffusion layer (1) tends to peel and handling becomes difficult. Further, if the ratio of proton conductive polymer is higher than the above range, the porosity of the gas diffusion layer (1) decreases, causing poor gas diffusion property and water discharge property.

The gas diffusion layer (1)-coating fluid preferably further contains a fluorinated resin other than the fluorinated proton conductive polymer. Such a fluorinated resin further improves water-repellent property in the gas diffusion layer (1). When the water repellent property improves, it becomes possible to avoid decrease in gas diffusion due to clogging of pores in the gas diffusion layer (1) or pores in a gas diffusion layer (2) to be described layer, with e.g. water generated in the catalyst layer, and to obtain higher output voltage.

The fluorinated polymer other than the fluorinated proton conductive polymer, may, for example, be a polytetrafluoroethylene, a fluorinated vinylidene resin or a fluorinated resin comprising at least one type selected from the group consisting of a tetrafluoroethylene/fluoroalkyl vinyl ether copolymer and a fluoroethylene/hexafluoropropylene copolymer, etc. The fluorinated resin other than fluorinated proton conductive polymer is preferably a polytetrafluoroethylene.

In the gas diffusion layer (1)-coating fluid, the content of fluorinated resin other than the fluorinated proton conductive polymer is preferably from 1 to 30% by mass of the carbon fibers, it is more preferably from 5 to 20%. The gas diffusion layer (1)-coating fluid particularly preferably contains a polytetrafluoroethylene in an amount of from 1 to 30% by mass of the carbon fibers, further preferably contains a polytetrafluoroethylene in an amount of from 5 to 20% by mass of the carbon fibers.

The gas diffusion layer (1)-coating fluid can be prepared by mixing the carbon fibers and the proton conductive polymer with a solvent.

The solvent may be any one so long as it can disperse carbon fibers and disperse or dissolve the proton conductive polymer. For example, when the proton conductive polymer is a fluorinated proton conductive polymer, the solvent is preferably an alcohol or a fluorinated solvent.

The alcohol may, for example, be ethanol, n-propanol, isopropanol, n-butanol, isobutanol or tert-butanol. In order to increase the solubility of the proton conductive polymer, a mixed solvent of an alcohol with water may be employed.

The fluorinated solvent may, for example, be a hydrofluorocarbon such as 2H-perfluoropropane, 1H,4H-perfluorobutane, 2H,3H-perfluoropentane, 3H,4H-perfluoro(2-methylpentane), 2H,5H-perfluorohexane, 3H-perfluoro(2-methylpentane), 1,1,1,2,2,3,4,5,5,5-decafluoropentane or 1,1,2,2,3,3,4-heptafluorocyclopentane;
a fluorocarbon such as perfluoro(1,2-dimethylcyclobutane), perfluorooctane, perfluoroheptane or perfluorohexane;
a hydrochlorofluorocarbon such as 1,1-dichloro-1-fluoroethane, 1,1,1-trifluoro-2,2-dichloroethane, 3,3-dichloro-1,1,1,2,2-pentafluoropropane or 1,3-dichloro-1,1,2,2,3-pentafluoropropane;
a fluoroether such as 1H,4H,4H-perfluoro(3-oxapentane), 3-methoxy-1,1,1,2,3,3-hexafluoropropane, 1,1,1,2,2,3,3,4,4-nonafluorobutylmethyl ether, 1,1,1,2,2,3,3,4,4-nonafluorobutylethyl ether; or
a fluorinated alcohol such as 2,2,2-trifluoroethanol, 2,2,3,3,3-pentafluoro-1-propanol, 1,1,1,3,3,3-hexafluoro-2-propanol or 1,1,1,2,3,3-hexafluorobutanol.

The solid content concentration of the gas diffusion layer (1)-coating fluid is preferably from 5 to 30 mass%, more preferably from 10 to 25 mass%. When the solid content concentration is within this range, the coating fluid has an appropriate viscosity, whereby the fluid can be uniformly applied and a formed coating film has no cracks.

The substrate for applying the gas diffusion layer (1)-coating fluid, may be a resin film. The material of the resin film may, for example, be a non-fluorinated resin such as polyethylene terephthalate, polyethylene, polypropylene or polyimide; or a fluorinated resin such as polytetrafluoroethylene, an ethylene/tetrafluoroethylene copolymer (ETFE), an ethylene/hexafluoropropylene copolymer, a tetrafluoroethylene/perfluoro(alkyl vinyl ether) copolymer or polyfluorinated vinylidene. Further, such a resin film may be one applied with surface treatment by a releasing agent.

The method for applying the gas diffusion layer (1)-coating fluid is not particularly limited, and it may be a known method such as a batch coating method or a continuous coating method

The batch coating method may, for example, be a bar coating method, a spin coating method or a screen printing method.

The continuous coating method may be a post measurement method or a preliminary measurement method.

The post measurement method is a method wherein an excess coating fluid is applied and later, the coating fluid is removed to bring the thickness to a predetermined thickness. The post measurement method may, for example, be an air doctor coating method, a blade coating method, a rod coating method, a knife coating method, a squeeze coating method, an impregnation coating method or a comma coating method. The preliminary measurement method is a method wherein a coating fluid is applied in an amount required to obtain the predetermined thickness. The preliminary measurement method may, for example, be a die coating method, a reverse roll coating method, a transfer roll coating method, a gravure coating method, a kiss-roll coating method, a cast coating method, a spray coating method, a curtain coating method, a calender coating method or an extrusion coating method.

The coating method is preferably a screen printing method or a die coating method from such a viewpoint that a catalyst layer having a uniform thickness can be formed, and the coating method is preferably a die coating method from the viewpoint of productivity.

The drying temperature of the coating film is preferably from 70 to 170°C, more preferably from 80 to 120°C.

In the gas diffusion layer (1) 24a containing carbon fibers and the proton conductive polymer, a plurality of carbon fibers tangle with one another to form pores. Since these pores function as gas channels, the gas diffusion layer (1) 24a has an excellent gas diffusion property.

At a time of power generation of a polymer electrolyte fuel cell, water (water vapor) is generated in the catalyst layer 22. The water moves from the catalyst layer 22 through the gas diffusion layer 24 and is discharged to the outside of the cell via a separator.

By providing at least one gas diffusion layer such as the gas diffusion layer (1) 24a containing carbon fibers and the proton conductive polymer, it is possible to improve the power generation performance of the polymer electrolyte fuel cell.

### Step (1-1-2): Removal step

This step is a step of removing the substrate from the gas diffusion layer (1)24a formed in step (1-1-1). For removal of the substrate, a common removal method may be employed.

### Step (1-1-3): Gas diffusion layer (2)24b-forming step

This step is a step of applying a gas diffusion layer (2)-coating fluid containing carbon fibers having a fiber diameter of at least 1 nm and less than 1,000 nm and a proton conductive polymer, on a surface of the gas diffusion layer (1) 24a from which the substrate is removed, to form a gas diffusion layer (2)24b.

The gas diffusion layer (2)-coating fluid can be prepared by mixing the carbon fibers and the proton conductive polymer with a solvent.

In the present invention, it is possible to obtain a high output voltage within a wide current density range only with a single gas diffusion layer (1)24a as the gas diffusion layer 24. However, it is more preferred to further provide a gas diffusion layer (2)24b.

The carbon fibers and the proton conductive polymer may be ones made of the same materials as those described in step (1-1-1).

By providing a gas diffusion layer (2)24b containing carbon fibers having a relatively small fiber diameter between a catalyst layer 22 and a gas diffusion layer (1)24a containing carbon fibers having a relatively large fiber diameter, to construct a gas diffusion layer 24 having a double layer structure, relatively large pores are formed in the gas diffusion layer (1)24a and relatively small pores are formed in the gas diffusion layer (2)24b, whereby water (water vapor) generated in the catalyst layer 22 at a time of operation of the fuel cell moves from the catalyst layer 22 to the gas diffusion layer (2)24b and from the gas diffusion layer (2)24b to the gas diffusion layer (1)24a quickly by capillarity, whereby it is expected to have an effect of solving the problem of flooding at the time of operation of the fuel cell.

The fiber diameter of the carbon fibers to be employed for the gas diffusion layer (2)-coating fluid, is preferably from 3 nm to 800 nm, more preferably from 5 to 200 nm.

The method for preparing the gas diffusion layer (2)-coating fluid and the method for application etc. may be carried out in the same manner as the method for preparing the gas diffusion layer (1)-coating fluid and the application method etc. of step (1-1-1).

The gas diffusion layer 24 may further have another gas diffusion sub layer other than the gas diffusion layer (1)24a and the gas diffusion layer (2)24b.

The thickness of the gas diffusion layer 24 is preferably from 30 µm to 400 µm, more preferably from 50 µm to 300 µm in terms of the total thickness when the gas diffusion layer is assembled into a membrane/electrode assembly (that is the distance from a surface of the gas diffusion layer 24 in contact with the catalyst layer to a surface of the gas diffusion layer 24 in contact with the separator, that is the total thickness of the gas diffusion layer (1)14a and the gas diffusion layer (2)14b in this embodiment). When the thickness is at least 30 µm, it is possible to improve gas diffusion property and water discharge property to obtain high output voltage, and when it is at most 400 µm, the entire membrane/electrode assembly has a thickness suitable for structural design. The thickness of the gas diffusion layer 24 may be appropriately adjusted by e.g. pressing the gas diffusion layer 24 just after it is applied and dried.

A gas diffusion layer 24 shown in Fig. 2 is prepared through the above steps (1-1-1) to (1-1-3).

Here, the step (1-1) may be one including steps (1-1-4) to (1-1-6) instead of one including steps (1-1-1) to (1-1-3).

### Step (1-1-4): Gas diffusion layer (2)24b-forming step

This step is a step of applying a gas diffusion layer (2)-coating fluid containing carbon fibers having a fiber diameter of at least 1 nm and less than 1,000 nm and a proton conductive polymer, on a substrate, and drying the applied fluid to form a gas diffusion layer (2)24b. Formation of the gas diffusion layer (2)24b may be carried out in the same manner as step (1-1-3).

### Step (1-1-5): Gas diffusion layer (1)24a-forming step

This step is a step of applying a gas diffusion layer (1)-coating fluid containing carbon fibers having a fiber diameter of from 1 µm to 50 µm and a proton conductive polymer, on the gas diffusion layer (2)24b formed in step (1-1-4), and drying the applied fluid to form a gas diffusion layer (1)24a. Formation of the gas diffusion layer (1)24a may be carried out in the same manner as step (1-1-1).

### Step (1-1-6): Removal step

This step is a step of removing the substrate from the gas diffusion layer (2)24b formed in step (1-1-4). Removal of the substrate may be carried out in the same manner as step (1-1-2).

The gas diffusion layer 24 shown in Fig. 2 can be produced through steps (1-1-4) to (1-1-6).

### Step (1-2): Electrolyte membrane 30 with catalyst layer 22-producing step

### Step (1-2) may, for example, be a method having steps (1-2-1) to (1-2-2).

### Step (1-2-1): Electrolyte membrane 30-forming step

This step is a step of applying an electrolyte membrane-coating fluid containing a proton conductive polymer, on a substrate, and drying the applied fluid to form an electrolyte membrane 30. The electrolyte membrane-coating fluid can be prepared by mixing a proton conductive polymer with a solvent. The proton conductive polymer and the solvent may be the proton conductive polymer and the solvent described in step (1-1-1).

The coating method of the electrolyte membrane-coating fluid etc. may be carried out in the same manner as the coating method of the gas diffusion layer (1)-coating fluid etc. described in step (1-1-1).

In this embodiment, the electrolyte membrane 30 may be a commercially available ion-exchange membrane.

The thickness of the electrolyte membrane 30 is preferably at most 50 µm, more preferably from 3 µm to 40 µm, particularly preferably from 5 µm to 30 µm. When the thickness of the electrolyte membrane 30 is at most 50 µm, it is possible to prevent the electrolyte membrane 30 from being in a dry state, and to suppress deterioration of the properties of the polymer electrolyte fuel cell. When the thickness of the electrolyte membrane 30 is at least 3 µm, no short circuit occurs.

### Step (1-2-2): Catalyst layer 22-forming step

This step is a step of applying a catalyst layer-coating fluid containing a catalyst and a proton conductive polymer, on the electrolyte membrane 30 to form a catalyst layer 22.

The catalyst may be any material so long as it promotes electrode reaction, and it may be a known electrode catalyst. Particularly, it is preferably a metal catalyst comprising fine particles of a metal such as a platinum group metal or an alloy containing a platinum group metal, or a supported catalyst wherein such a metal catalyst is supported on a carbon carrier.

The platinum group metal may, for example, be platinum, ruthenium, rhodium, palladium, osmium or iridium.

The alloy containing a platinum group metal is preferably an alloy of platinum and at least one type of metal selected from the group consisting of a metal of platinum group excluding platinum (such as ruthenium, rhodium, palladium, osmium or iridium), gold, silver, chromium, iron, titanium, manganese, cobalt, nickel, molybdenum, tungsten, aluminum, silicon, zinc and tin. The platinum alloy may contain an intermetallic compound of platinum with a metal to be alloyed with platinum.

The platinum alloy to be used as the catalyst to be employed for a catalyst layer 12, is preferably an alloy containing platinum and ruthenium for the reason that activity of the electrode catalyst is stable even when the gas containing carbon monoxide is supplied.

The carbon carrier may, for example, be an activated carbon or a carbon black.

The specific surface area of the carbon carrier is preferably at least 200 m²/g. The specific surface area of the carbon carrier is measured by adsorption of nitrogen on the carbon surface by a BET specific surface area measuring apparatus.

The supported amount of the metal catalyst in the supported catalyst is preferably from 10 to 70 mass% of the total mass of the supported catalyst.

The metal catalyst contained in the catalyst layer 22 is preferably from 0.01 to 0.5 mg/cm², more preferably from 0.05 to 0.35 mg/cm² from the viewpoint of providing an optimum thickness for conducting an electrode reaction efficiently.

From the viewpoint of conductivity of electrode and water repellent property, the catalyst-layer-coating fluid preferably contains the supported catalyst and a proton conductive polymer with a mass ratio of catalyst carbon:proton conductive polymer of from 1.0:0.1 to 1.0:1.6, particularly preferably with a mass ratio of catalyst carbon:proton conductive polymer of from 1.0:0.3 to 1.0:1.2. Here, the above catalyst carbon is the mass of carbon carrier in the supported catalyst.

The catalyst layer-coating fluid can be prepared by mixing a catalyst and a proton conductive polymer with a solvent. As the proton conductive polymer and the solvent, ones substantially the same as those described in step (1-1-1) may be employed.

The method for applying the catalyst layer-coating fluid can be carried out in the same manner as the method for applying the gas diffusion layer (1)-coating fluid described in step (1-1-1).

The thickness of the catalyst layer 22 is preferably at most 20 µm, more preferably from 1 µm to 15 µm from the viewpoint of facilitating gas diffusion in the catalyst layer 22 and improving the properties of the polymer electrolyte fuel cell. Further, the thickness of the catalyst layer is preferably uniform. When the thickness of the catalyst layer is thin, the catalyst amount present in an unit area becomes small and reaction activity may decrease. But in this case, by employing a supported catalyst wherein a metal catalyst is supported with a high supporting ratio as the electrode catalyst, it is possible to maintain high reaction activity without lack of catalyst amount even if the catalyst is thin.

The electrolyte membrane 30 with a catalyst layer 22 shown in Fig. 2 is produced through the above steps (1-2-1) to (1-2-2).

### Step (1-3): Anode 10 forming step

### Step (1-3) may, for example, be a method having steps (1-3-1) to (1-3-4).

### Step (1-3-1): Gas diffusion layer (1)14a-forming step

This step is a step of applying a gas diffusion layer (1)-coating fluid containing carbon fibers having a fiber diameter of from 1 µm to 50 µm and a proton conductive polymer, on a substrate, to form a gas diffusion layer (1)14a. Formation of the gas diffusion layer (1)14a may be carried out in the same manner as step (1-1-1).

### Step (1-3-2): Removal step

This step is a step of removing the substrate from the gas diffusion layer (1)14a prepared in step (1-3-2). The removal method of the substrate may be carried out in the same manner as step (1-1-2).

### Step (1-3-3): Gas diffusion layer (2)14b-forming step

This step is a step of applying a gas diffusion layer (2)-coating fluid containing carbon fibers having a fiber diameter of at least 1 nm and less than 1,000 nm and a proton conductive polymer, on a surface of the gas diffusion layer (1)14a prepared in step (1-3-2) from which the substrate is removed, and drying the applied fluid to form a gas diffusion layer (2)14b. Formation of the gas diffusion layer (2)14b may be carried out in the same manner as step (1-1-3).

In this embodiment, the gas diffusion layer 14 consisting of only a single gas diffusion layer (1)14a exhibits the effect of the present invention, but for the same reason as that described in step (1-1-3), it is preferred to further provide a gas diffusion layer (2)14b.

### Step (1-3-4): Catalyst layer 12-forming step

This step is a step of applying a catalyst layer-coating fluid containing a catalyst and a proton conductive polymer, on the gas diffusion layer (2)14b formed in step (1-3-3), to form a catalyst layer 12. Formation of the catalyst layer 12 may be carried out in the same manner as step (1-2-2).

An anode 10 shown in Fig. 2 is formed through the above steps (1-3-1) to (1-3-4).

As step (1-3), one having steps (1-3-1) to (1-3-4) has been described. However, in this embodiment, it is also possible to obtain the anode 10 by applying the catalyst layer-forming coating fluid on a normal gas diffusion layer to form the catalyst layer 12. Such a normal gas diffusion layer may be a porous conductive material such as a commercially available carbon paper, a carbon cloth or a carbon felt.

Further, in this embodiment, the anode 10 is comprised of a catalyst layer 12 and a gas diffusion layer 14 consisting of a gas diffusion layer (1)14a and a gas diffusion layer (2)14b, but the anode 10 may be one consisting of the catalyst layer 12 alone.

In this case, the outermost layer of the anode 10 side is the catalyst layer 12. However, since the gas diffusion layer 14 has a function of promoting diffusion of gas between a separator and the catalyst layer 12, and a function of current collector, etc., the anode 10 preferably has the gas diffusion layer 14.

The anode 10 shown in Fig. 2 is prepared through the above steps (1-3-1) to (1-3-4).

### Step (1-4): Bonding step

This step is a step of disposing the gas diffusion layer 24 formed in step (1-1) and the electrolyte membrane 30 with catalyst layer 22 formed in step (1-2) so that a surface of the gas diffusion layer (2)24b of the gas diffusion layer 24 contacts with a surface of the catalyst layer 22 of the electrolyte membrane 30 with catalyst layer 22; removing the substrate from the electrolyte membrane 30; disposing the anode 10 prepared in step (1-3) so that a surface of the electrolyte membrane 30 from which the substrate is removed contacts with a surface of the anode 10 on the catalyst layer 12 side; and bonding them.

Bonding of the gas diffusion layer (2)24b with the catalyst layer 22 and bonding of the electrolyte membrane 30 with the catalyst layer 12 may be carried out by hot pressing, a hot roll pressing or ultrasonic fusion bonding, etc. From the viewpoint of uniformity in the entire area, hot pressing is preferred.

The temperature for hot pressing is preferably from 100 to 200°C, more preferably from 120 to 150°C. The pressure for pressing is preferably from 0.3 to 4 MPa, more preferably from 1 to 3 MPa. Through the above steps, a membrane/electrode assembly 1 can be obtained.

### <Second embodiment>

As another method for producing the membrane/electrode assembly 1, a method including steps (2-1) to (2-4) may be mentioned, and steps (2-1) to (2-4) may, specifically, be methods having the following steps.
Step (2-1): Gas diffusion layer 14-forming step
   Step (2-1-1): Gas diffusion layer (1)14a-forming step
   Step (2-1-2): Removal step
   Step (2-1-3): Gas diffusion layer (2)14b-forming step or
   Step (2-1-4): Gas diffusion layer (2)14b-forming step
   Step (2-1-5): Removal step
   Step (2-1-6): Gas diffusion layer (1)14a-forming step
Step (2-2): Electrolyte membrane 30 with catalyst layer 12-forming step
   Step (2-2-1): Electrolyte membrane 30-forming step
   Step (2-2-2): Catalyst layer 12-forming step
Step (2-3): Cathode 20-forming step
   Step (2-3-1): Gas diffusion layer (1)24a-forming step
   Step (2-3-2): Removal step
   Step (2-3-3): Gas diffusion layer (2)24b-forming step
   Step (2-3-4): Catalyst layer 22-forming step
Step (2-4): Bonding step

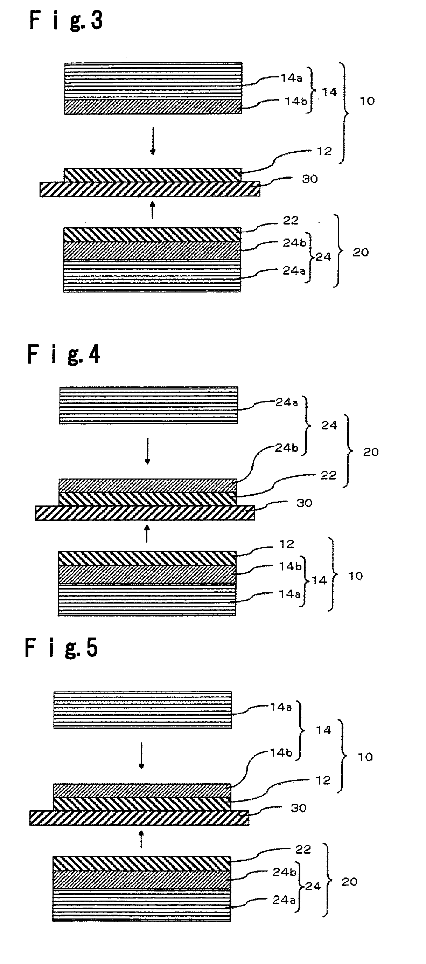

This embodiment can be carried out in the same manner as the first embodiment except that the positions of the anode 10 and the cathode 20 are reversed at a time of production as shown in Fig. 3. A membrane/electrode assembly 1 produced in this embodiment exhibits the same effect as that of the membrane/electrode assembly 1 described in the first embodiment.

### <Third embodiment>

As another process for producing a membrane/electrode assembly 1, a process having steps (3-1) to (3-4) may be mentioned. This process will be described with reference to Fig. 4.
Step (3-1): Gas diffusion layer (1)24a-forming step
Step (3-2): Electrolyte membrane 30 with gas diffusion layer (2)24b and catalyst layer 22-forming step
Step (3-3): Anode 10-forming step
Step (3-4): Bonding step
Step (3-1): Gas diffusion layer (1)24a-forming step
Step (3-1) may, for example, be a method having steps (3-1-1) to (3-1-2).
Step (3-1-1): Gas diffusion layer (1)24a-forming step

This step is a step of applying a gas diffusion layer (1)-coating fluid containing carbon fibers having a fiber diameter of from 1 µm to 50 µm and a proton conductive polymer, on a substrate, to form a gas diffusion layer (1)24a. This step can be carried out in the same manner as step (1-1-1) of the first embodiment.

### Step (3-1-2): Removal step

This step is a step of removing a substrate from the gas diffusion layer (1)24a prepared in step (3-1-1). In this step, a gas diffusion layer (1)24a is obtained. This step can be carried out in the same manner as step (1-1-2) of the first embodiment.

Step (3-2): Electrolyte membrane 30 with gas diffusion layer (2)24b and catalyst layer 22-forming step.

Step (3-2) may, for example, be a method having steps (3-2-1) to (3-2-3).

Step (3-2-1): Electrolyte membrane 30-forming step

This step is a step of applying an electrolyte membrane-coating fluid containing a proton conductive polymer, on a substrate, and drying the applied fluid to form an electrolyte membrane 30. This step can be carried out in the same manner as step (1-2-1) of the first embodiment. Further, in the same manner as first embodiment, a commercially available ion exchange membrane may be employed as the electrolyte membrane 30.

### Step (3-2-2): Catalyst layer 22-forming step

This step is a step of applying a catalyst layer-coating fluid containing a catalyst and a proton conductive polymer, on the electrolyte membrane 30, to form a catalyst layer 22. This step can be carried out in the same manner as step (1-2-2) of the first embodiment.

### Step (3-2-3): Gas diffusion layer (2)24b-forming step

This step is a step of applying a gas diffusion layer-coating fluid (2) containing carbon fibers having a fiber diameter of at least 1 nm and less than 1,000 nm and a proton conductive polymer, on the catalyst layer 22 formed in step (3-2-2), to form a gas diffusion layer (2)24b. Formation of the gas diffusion layer (2)24b can be carried out in the same manner as step (1-1-3) of the first embodiment.

### Step (3-3): Anode 10-forming step

This step can be carried out in the same manner as step (1-3) of the first embodiment.

### Step (3-4): Bonding step

This step is, as shown in Fig. 4, a step of disposing the gas diffusion layer (1)24a prepared in step (3-1) and the electrolyte membrane 30 with gas diffusion layer (2)24b and catalyst layer 22 prepared in step (3-2) so that the gas diffusion layer (1)24a contact with a surface of the gas diffusion layer (2)24b, removing a substrate from the electrolyte membrane 30, disposing the anode 10 prepared in step (3-3) so that a surface of the catalyst layer 12 of the anode 10 contacts with a surface of the electrolyte membrane from which the substrate is removed, and bonding them. Bonding of the gas diffusion layer (2)24a with the gas diffusion layer (2)24b and bonding of the electrolyte membrane 30 with the catalyst layer 12, may be carried out in the same manner as step (1-4) of the first embodiment.

A membrane/electrode assembly 1 can be obtained through the above steps. The membrane/electrode assembly 1 produced in this embodiment exhibits the same effect as that of the membrane/electrode assembly 1 described in the first embodiment.

### <Fourth embodiment>

Another process for producing a membrane/electrode assembly 1 may be a process containing steps (4-1) to (4-4). Step (4-1) may be a method having steps (4-1-1) to (4-1-2), and step (4-2) may be a method having steps (4-2-1) to (4-2-3).
Step (4-1): Gas diffusion layer (1)14a-forming step
   Step (4-1-1): Gas diffusion layer (1)14a-forming step
   Step (4-1-2): Removal step
Step (4-2): Electrolyte membrane with gas diffusion layer (2)14b and catalyst layer 12-forming step
   Step (4-2-1): Electrolyte membrane 30-forming step
   Step (4-2-2): Catalyst layer 12-forming step
   Step (4-2-3): Gas diffusion layer (2)14b-forming step
Step (4-3): Cathode 20-forming step
Step (4-4): Bonding step

This embodiment can be carried out in the same manner as the third embodiment except that positions of the anode 10 and the cathode 20 are reversed at a time of production as shown in Fig. 5. A membrane/electrode assembly 1 produced in this embodiment exhibits the same effect as the effect of the membrane/electrode assembly 1 described in the first embodiment.

In the first and third embodiments, as the method for forming the anode 10 on a surface of the electrolyte membrane 30, a method of directly forming the catalyst layer 12 on a surface of the electrolyte membrane 30 and disposing a normal gas diffusion layer on a surface of the catalyst layer 12 that does not contact with the electrolyte membrane 30, as the gas diffusion layer, may, for example, be mentioned.

As the method for directly forming the catalyst layer 12 on a surface of the electrolyte membrane 30, a method of forming a catalyst layer 12 on a sheet-form substrate by using a catalyst layer-forming-coating fluid, and transferring the catalyst layer 12 onto a surface of the electrolyte membrane 30; or a method of directly applying the catalyst layer-forming-coating fluid on a surface of the electrolyte membrane to form a catalyst layer 12, may be employed.

The method for disposing a normal gas diffusion layer on a surface of the catalyst layer 12 that does not contact with the electrolyte membrane 30, may, for example, be a method of disposing a normal gas diffusion layer as the gas diffusion layer 14 on a surface of the catalyst layer 12 that does not contact with the electrolyte membrane 30, and fixing the gas diffusion layer 14 by e.g. hot pressing, hot roll pressing or ultrasonic fusion bonding. The normal gas diffusion layer may be one described in the first embodiment.

Here, there is no resin component on a surface of a commercially available conductive material to be employed for a normal gas diffusion layer. Accordingly, when such a conductive material is laminated with the catalyst layer and e.g. hot pressing is carried out, it is possible to fix them for temporarily, but its adhesion is insufficient. For this reason, surfaces of such a conductive material are sprayed with a diluted solution of proton conductive polymer before it is employed as the gas diffusion layer in some cases.

In the same manner, also in the second and fourth embodiments, as a method for forming a cathode 20 on a surface of the electrolyte membrane 30, a method of directly forming a catalyst layer 22 on a surface of the electrolyte membrane 30 may be employed, and the above-described method may be employed.

In a polymer electrolyte fuel cell employing a membrane/electrode assembly obtained by the process of the present invention, a gas diffusion layer and a separator are adjacent to each other.

The separator may be any one of separators made of various electrically conductive materials, such as a separator made of a metal, a separator made of carbon or a separator made of a mixed material of graphite and a resin.

### EXAMPLES

Now, the present invention will be specifically described with reference to Examples (Examples 1 to 10 and 13 to 16) and Comparative Examples (Examples 11 and 12), but the present invention is not limited to these Examples.

### [1. Preparation of catalyst layer-coating fluid (a-1)]

10.0 g of a catalyst (manufactured by Tanaka Kinzoku Kogyo K.K.) wherein platinum-cobalt alloy (platinum:cobalt = 46:5 (mass ratio)) in an amount of 51% by mass of total catalyst is supported on a carbon carrier (specific surface area 800 m²/g), is added to 76.0 g of distilled water, and the mixture was stirred. To this stirred product, 74.0 g of ethanol was added and the mixture was stirred. To this stirred product, 14.0 g of a dispersion (hereinafter referred to as dispersion of copolymer (A)) was added, which is a dispersion having a solid content of 28 mass% obtained by dispersing a copolymer (ion exchange capacity 1.1 meq/g dry resin) prepared by copolymerizing CF₂=CF₂ and CF₂=CFOCF₂CF(CF₃)O(CF₂)₂SO₂F and converting its - SO₂F to -SO₃H by hydrolysis, in a mixed solvent of ethanol:water of 6:4. Further the catalyst and the copolymer (A) were mixed and dispersed by using a homogenizer, to obtain catalyst layer-coating fluid (a-1).

### [2. Preparation of gas diffusion layer-coating fluid (b1, b2, b3)]

40.9 g of ethanol and 41.9 g of distilled water were added to 20.0 g of carbon fibers, and they were mixed and dispersed by using a homogenizer. To them, 7.1 g of the above dispersion of copolymer (A) was added and stirred to obtain a gas diffusion layer-coating fluid. The fluid employing milled fibers (product name: MLD-1000, manufactured by Toray Industries, Inc. fiber diameter about 7 µm, fiber length 150 µm) as the carbon fibers is designated as gas diffusion layer coating fluid (b1), the fluid employing chopped fibers (product name: K223QG, manufactured by Mitsubishi Chemical Functional Products, Inc., fiber diameter about 11 µm, fiber length 6 mm) is designated as gas diffusion layer-coating fluid (b2), and the fluid employing carbon fibers (product name: BESFIGHT MC, Toho Tenax Co., Ltd., fiber diameter about 7.5 µm) is designated as gas diffusion layer coating fluid (b3).

### [3. Preparation of gas diffusion layer-coating fluid (b5)]

59.2 g of ethanol and 60.3 g of distilled water were added to 20.0 g of vapor grown carbon fibers (tradename: VGCF-H, manufactured by Showa Denko K.K., fiber diameter about 150 nm, fiber length 10 to 20 µm), and the mixture was stirred and dispersed by using a homogenizer. To this mixture, 7.1 g of the above dispersion of copolymer (A) was added, and the slurry was stirred to obtain a gas diffusion layer-coating fluid (b5).

### [4. Preparation of gas diffusion layer-coating fluid (b6)]

57.4 g of ethanol, 7.4 g of distilled water and 29.0 g of 1,1,2,2,3,3,4-heptafluorocyclopentane (tradename: Zeorora-H, Zeon Corporation) were added to 20.0 g of chopped fibers (tradename: K223QG, manufactured by Mitsubishi Chemical Functional Products, Inc., fiber diameter about 11 µm, fiber length 6 mm) and 2.0 g of vapor grown carbon fibers (tradename: VGCF-H, manufactured by Showa Denko K.K., fiber diameter about 150 nm, fiber length from 10 to 20 µm), and the mixture was stirred and dispersed by using a homogenizer. To this mixture, 7.9 g of the above dispersion of copolymer (A) was added, and the mixture was stirred to obtain a gas diffusion-coating fluid (b6).

### [5. Preparation of gas diffusion layer-coating fluid (b7)]

57.4 g of ethanol, 7.9 g of distilled water and 30.4 g of 1,1,2,2,3,3,4-heptafluorocyclopentane (tradename: Zeorora-H, Zeon Corporation) were added to 20.0 g of chopped fibers (tradename: K223QG, manufactured by Mitsubishi Chemical Functional Products, Inc., fiber diameter about 11 µm, fiber length 6 mm), 2.0 g of vapor grown carbon fibers (tradename: VGCF-H, manufactured by Showa Denko K.K., fiber diameter about 150 nm, fiber length from 10 to 20 µm) and 1.1 g of polytetrafluoroethylene fine power (tradename: SSTD-2, manufactured by Shamrock, average particle size: about 5 to 8 µm), and the mixture was stirred and dispersed by using a homogenizer. To this mixture, 9.3 g of the above dispersion of copolymer (A) was added, and the slurry was stirred to obtain a gas diffusion-coating fluid (b7).

### [6. Preparation of gas diffusion layer-coating fluid (b8)]

52.1 g of ethanol, 7.1 g of distilled water and 27.6 g of 1,1,2,2,3,3,4-heptafluorocyclopentane (tradename: Zeorora-H, Zeon Corporation) were added to 20.0 g of chopped fibers (tradename: K223QG, manufactured by Mitsubishi Chemical Functional Products, Inc., fiber diameter about 11 µm, fiber length 6 mm) and 1.0 g of polytetrafluoroethylene fine powder (tradename: SSTD-2, manufactured by Shamrock, average particle size: about 5 to 8 µm), and the mixture was stirred and dispersed by using a homogenizer. To this mixture, 7.1 g of the above dispersion of copolymer (A) was added, and the slurry was stirred to obtain a gas diffusion-coating fluid (b8).

### [7. Preparation of gas diffusion layer (b1)]

After a gas diffusion layer-coating fluid (b1) was applied on a substrate film, it was dried in a dryer at 80°C for 30 minutes and further dried at 130°C for 30 minutes, it was pressed at 1.5 MPa for 1 minute and the substrate film was removed to obtain a gas diffusion layer (b1) having a thickness of about 200 µm.

### [8. Preparation of gas diffusion layer (b2)]

After a gas diffusion layer-coating fluid (b2) was applied on a substrate film, it was dried in a dryer at 80°C for 30 minutes and further dried at 130°C for 30 minutes, it was pressed at 1.5 MPa for 1 minute and the substrate film was removed to obtain a gas diffusion layer (b2) having a thickness of about 200 µm.

### [9. Preparation of gas diffusion layer (b3)]

After a gas diffusion layer-coating fluid (b3) was applied on a substrate film, it was dried in a dryer at 80°C for 30 minutes and further dried at 130°C for 30 minutes, it was pressed at 1.5 MPa for 1 minute and the substrate film was removed to obtain a gas diffusion layer (b3) having a thickness of about 200 µm.

### [10. Preparation of gas diffusion layers (b1+b5)]

The gas diffusion layer-coating fluid (b5) was applied on a surface of the gas diffusion layer (b1) prepared in the above item 7 from which the substrate was removed, so that the thickness of the layer including the vapor grown carbon fibers after drying became 10 µm, and thereafter, it was dried in a dryer at 80°C for 30 minutes to obtain gas diffusion layers (b1+b5) being a lamination of the gas diffusion layer (b1) and the gas diffusion layer (b5) and having a thickness of 210 µm.

### [11. Preparation of gas diffusion layers (b2+b5)]

The gas diffusion layer-coating fluid (b5) was applied on a surface of the gas diffusion layer (b2) prepared in the above item 8 from which the substrate was removed, so that the thickness of the layer including the vapor grown carbon fibers after drying became 10 µm, and thereafter, it was dried in a dryer at 80°C for 30 minutes to obtain gas diffusion layers (b2+b5) being a lamination of the gas diffusion layer (b2) and the gas diffusion layer (b5) and having a thickness of 210 µm.

### [12. Preparation of gas diffusion layers (b8+b5)]

After a gas diffusion layer-coating fluid (b8) was applied on a substrate film, it was dried in a dryer at 80°C for 30 minutes and further dried at 130°C for 30 minutes, it was pressed at 1.5 MPa for 1 minute and the substrate film was removed to obtain a gas diffusion layer (b8) having a thickness of about 200 µm. The gas diffusion layer-coating fluid (b5) was applied on a surface of the gas diffusion layer (b8) from which the substrate was removed, so that the thickness of the layer including the vapor grown carbon fibers after drying became 10 µm, and thereafter, it was dried in a dryer at 80°C for 30 minutes to obtain a gas diffusion layer (b8+b5) being a lamination of the gas diffusion layer (b8) and the gas diffusion layer (b5) and having a thickness of 210 µm.

### [13. Preparation of gas diffusion layer (b6)]

After a gas diffusion layer-coating fluid (b6) was applied on a substrate film, it was dried in a dryer at 80°C for 30 minutes and further dried at 130°C for 30 minutes, it was pressed at 1.5 MPa for 1 minute and the substrate film was removed to obtain a gas diffusion layer (b6) having a thickness of about 200 µm.

### [14. Preparation of gas diffusion layer (b7)]

After a gas diffusion layer-coating fluid (b7) was applied on a substrate film, it was dried in a dryer at 80°C for 30 minutes and further dried at 130°C for 30 minutes, it was pressed at 1.5 MPa for 1 minute and the substrate film was removed to obtain a gas diffusion layer (b7) having a thickness of about 200 µm.

### [15. Preparation of gas diffusion layers (b6+b5)]

The gas diffusion layer-coating fluid (b5) was applied on a surface of the gas diffusion layer (b6) prepared in the above item 13 from which the substrate was removed, so that the thickness of the layer including the vapor grown carbon fibers after drying became 10 µm, and thereafter, it was dried in a dryer at 80°C for 30 minutes to obtain a gas diffusion layers (b6+b5) being a lamination of the gas diffusion layer (b6) and the gas diffusion layer (b5) and having a thickness of 210 µm.

### [16. Preparation of gas diffusion layers (b7+b5)]

The gas diffusion layer-coating fluid (b5) was applied on a surface of the gas diffusion layer (b7) prepared in the above item 14 from which the substrate was removed, so that the thickness of the layer including the vapor grown carbon fibers after drying became 10 µm, and thereafter, it was dried in a dryer at 80°C for 30 minutes to obtain a gas diffusion layers (b7+b5) being a lamination of the gas diffusion layer (b7) and the gas diffusion layer (b5) and having a thickness of 210 µm.

### [17. Preparation of electrolyte membrane (c1) with catalyst layer]

The dispersion of copolymer (A) was applied on a substrate film using a die coater so that the dry film thickness became 30 µm, and it was dried in a dryer at 80°C for 30 minutes to obtain a proton conductive polymer membrane (f). On the membrane, the catalyst layer-coating fluid (a-1) prepared in the above item 1 was applied using a die coater so that the platinum amount in the catalyst layer after drying became 0.2 mg/cm², and thereafter, it was dried in a dryer at 80°C for 30 minutes to form an electrolyte membrane (c1) with a catalyst layer. By removing the substrate from the membrane, an electrolyte membrane (c1) with a catalyst layer was obtained.

### [18. Preparation of electrolyte membrane (c2) with a gas diffusion layer (b5) and a catalyst layer]

The gas diffusion layer-coating fluid (b5) was applied on a surface of the catalyst layer of the electrolyte membrane (c1) with a catalyst layer prepared in item 17, so that the thickness of the layer containing vapor grown carbon fibers after drying became 10 µm, and it was dried in a dryer at 80°C for 30 minutes to form an electrolyte membrane (c2) with a gas diffusion layer (b5) and a catalyst layer, thereby to obtain an electrolyte membrane (c2) with a gas diffusion layer (b5) and a catalyst layer.

### [19. Preparation of electrode (c3)]

The catalyst layer-coating fluid (a-1) was applied on a surface of the gas diffusion layer (b5) of the gas diffusion layers (b2+b5) prepared in step 11, so that the platinum amount in the catalyst layer after it was dried became 0.2 mg/cm², and it was dried in a dryer at 80°C for 30 minutes to form an electrode (c3).

### EXAMPLE 1

The gas diffusion layers (b1+b5) prepared in the above item 10 and the electrolyte membrane (c1) with a catalyst layer prepared in the above step 17 were disposed so that a surface of the gas diffusion layer (b5) of the gas diffusion layers (b1+b5) contacts with a surface of the catalyst layer of the electrolyte membrane (c1) with a catalyst layer. Further, the electrode (c3) prepared in the above step 19 was disposed so that a surface of the catalyst layer of the electrode (c3) contacts with a surface of the electrolyte membrane of the electrolyte membrane (c1) with a catalyst layer. Hot pressing at a temperature of 130°C and a pressure of 2 MPa was applied to this laminate, to prepare a membrane/electrode assembly 1 having an electrode area of 25 cm². The layer structure of this membrane/electrode assembly 1 was, in the order from the cathode side, gas diffusion layer (b1)/gas diffusion layer (b5)/catalyst layer (a)/electrolyte membrane/catalyst layer (a)/gas diffusion layer (b5)/gas diffusion layer (b2).

The obtained membrane/electrode assembly 1 was assembled into a power generation cell, and hydrogen (utilization ratio 70%)/air (utilization ratio 40%) were supplied under atmospheric pressure, and the cell voltages in the initial stage of operation at a cell temperature of 80°C at current densities of 0.2 A/cm² and 1.5 A/cm² were measured. Here, hydrogen having a dew point of 80°C was supplied into the cell from the anode side and air having a dew point of 80°C was supplied into the cell from the cathode side, and the cell voltages at an initial stage of operation were measured. Table 1 shows the results.

### EXAMPLE 2

A membrane/electrode assembly 2 was produced in the same manner as Example 1 except that the gas diffusion layers (b2+b5) prepared in the above item 11 was employed instead of the gas diffusion layers (b1+b5). The layer construction of the membrane/electrode assembly 2 was, in the order from the cathode side, gas diffusion layer (b2)/gas diffusion layer (b5)/catalyst layer (a)/electrolyte membrane/catalyst layer (a)/gas diffusion layer (b5)/gas diffusion layer (b2).

The obtained membrane/electrode assembly 2 was assembled into a power generation cell, and the cell voltages in the initial stage of operation were measured under the same conditions as those of Example 1. Table 1 shows the results.

### EXAMPLE 3

A membrane/electrode assembly 3 was produced in the same manner as Example 1 except that the gas diffusion layers (b8+b5) prepared in the above item 12 was employed instead of the gas diffusion layers (b1 +b5). The layer construction of the membrane/electrode assembly 3 was, in the order from the cathode side, gas diffusion layer (b8)/gas diffusion layer (b5)/catalyst layer (a)/electrolyte membrane/catalyst layer (a)/gas diffusion layer (b5)/gas diffusion layer (b2).

The obtained membrane/electrode assembly 3 was assembled into a power generation cell, and the cell voltages in the initial stage of operation were measured under the same conditions as those of Example 1. Table 1 shows the results.

### EXAMPLE 4

A membrane/electrode assembly 4 was produced in the same manner as Example 1 except that the gas diffusion layers (b6+b5) prepared in the above item 15 was employed instead of the gas diffusion layers (b1+b5). The layer construction of the membrane/electrode assembly 4 was, in the order from the cathode side, gas diffusion layer (b6)/gas diffusion layer (b5)/catalyst layer (a)/electrolyte membrane/catalyst layer (a)/gas diffusion layer (b5)/gas diffusion layer (b2).

The obtained membrane/electrode assembly 4 was assembled into a power generation cell, and the cell voltages in the initial stage of operation were measured under the same conditions as those of Example 1. Table 1 shows the results.

### EXAMPLE 5

A membrane/electrode assembly 5 was produced in the same manner as Example 1 except that the gas diffusion layers (b7+b5) prepared in the above item 16 was employed instead of the gas diffusion layers (b1+b5). The layer construction of the membrane/electrode assembly 5 was, in the order from the cathode side, gas diffusion layer (b7)/gas diffusion layer (b5)/catalyst layer (a)/electrolyte membrane/catalyst layer (a)/gas diffusion layer (b5)/gas diffusion layer (b2).

The obtained membrane/electrode assembly 5 was assembled into a power generation cell, and the cell voltages in the initial state of operation were measured under the same conditions as those of Example 1. Table 1 shows the results.

### EXAMPLE 6

The electrolyte membrane (c2) with a gas diffusion layer (b5) and a catalyst layer prepared in the above item 18 and the gas diffusion layer (b1) prepared in the above item 7 were disposed so that a surface of the gas diffusion layer (b5) of the electrolyte membrane (c2) contacts with the gas diffusion layer (b1). Further, the electrode (c3) prepared in the above item 19 was disposed so that a surface of the catalyst layer of the electrode (c3) contacts with a surface of the electrolyte membrane of the electrolyte membrane (c2) with a gas diffusion layer (b5) and a catalyst layer. To this laminate, hot pressing at a temperature of 130°C and a pressure of 2 MPa was applied to bond the laminate, producing a membrane/electrode assembly 6 having an electrode area of 25 cm². The layer construction of the membrane/electrode assembly 6 was, in the order from the cathode side, gas diffusion layer (b1)/gas diffusion layer (b5)/catalyst layer (a)/electrolyte membrane/catalyst layer (a)/gas diffusion layer (b5)/gas diffusion layer (b2).

The obtained membrane/electrode assembly 6 was assembled into a power generation cell, and the cell voltages in the initial stage of operation were measured under the same conditions as those of Example 1. Table 1 shows the results.

### EXAMPLE 7

A membrane/electrode assembly 7 was produced in the same manner as Example 6 except that the gas diffusion layer (b2) prepared in the above item 8 was employed instead of the gas diffusion layer (b1). The layer construction of the membrane/electrode assembly 7 was, in the order from the cathode side, gas diffusion layer (b2)/gas diffusion layer (b5)/catalyst layer (a)/electrolyte membrane/catalyst layer (a)/gas diffusion layer (b5)/gas diffusion layer (b2).

The obtained membrane/electrode assembly 7 was assembled into a power generation cell, and the cell voltages in the initial stage of operation were measured under the same conditions as those of Example 1. Table 1 shows the results.

### EXAMPLE 8

A membrane/electrode assembly 8 was produced in the same manner as Example 6 except that the gas diffusion layer (b3) prepared in the above item 9 was employed instead of the gas diffusion layer (b1). The layer construction of the membrane/electrode assembly 8 was, in the order from the cathode side, gas diffusion layer (b3)/gas diffusion layer (b5)/catalyst layer (a)/electrolyte membrane/catalyst layer (a)/gas diffusion layer (b5)/gas diffusion layer (b2).

The obtained membrane/electrode assembly 8 was assembled into a power generation cell, and the cell voltages in the initial stage of operation were measured under the same conditions as those of Example 1. Table 1 shows the results.

### EXAMPLE 9

A membrane/electrode assembly 9 was produced in the same manner as Example 6 except that the gas diffusion layer (b6) prepared in the above item 13 was employed instead of the gas diffusion layer (b1). The layer construction of the membrane/electrode assembly 7 was, in the order from the cathode side, gas diffusion layer (b6)/gas diffusion layer (b5)/catalyst layer (a)/electrolyte membrane/catalyst layer (a)/gas diffusion layer (b5)/gas diffusion layer (b2).

The obtained membrane/electrode assembly 9 was assembled into a power generation cell, and the cell voltages in the initial stage of operation were measured under the same conditions as those of Example 1. Table 1 shows the results.

### EXAMPLE 10

A membrane/electrode assembly 10 was produced in the same manner as Example 6 except that the gas diffusion layer (b7) prepared in the above item 14 was employed instead of the gas diffusion layer (b1). The layer construction of the membrane/electrode assembly 7 was, in the order from the cathode side, gas diffusion layer (b7)/gas diffusion layer (b5)/catalyst layer (a)/electrolyte membrane/catalyst layer (a)/gas diffusion layer (b5)/gas diffusion layer (b2).

The obtained membrane/electrode assembly 10 was assembled into a power generation cell, and the cell voltages in the initial stage of operation were measured under the same conditions as those of Example 1. Table 1 shows the results.

### EXAMPLE 11

The catalyst-layer-coating fluid (a-1) was applied on a substrate film made of polypropylene using a die coater, and it was dried in a dryer at 80°C for 30 minutes to form a catalyst layer (a). By this step, a laminate (catalyst layer (a) laminate) wherein a catalyst layer (a) was laminated on a substrate film, was obtained.

The mass of the substrate film alone before forming the catalyst layer (a), and the mass of the substrate film on which the catalyst layer (a) was formed, were measured, to obtain the amount of platinum contained in the catalyst layer (a) per a unit area, and as a result, it was 0.2 mg/cm².

An ion exchange membrane (tradename: Flemion, manufactured by Asahi Glass Company, Limited, ion exchange capacity 1.1 meq/g dry resin) made of perfluorocarbon polymer having sulfonic acid groups and having a thickness of 30 µm was employed as an electrolyte membrane, and a catalyst layer (a) from which a substrate was removed was transferred onto each side of the electrolyte membrane, to form an assembly having a construction of catalyst layer (a)/electrolyte membrane/catalyst layer (a), in the order from the cathode side. The assembly was sandwiched between two gas diffusion layers each made of a carbon cloth having a thickness of 350 µm, and they were subjected to hot pressing at a temperature of 130°C and a pressure of 2 MPa, to form a membrane/electrode assembly 11.

The obtained membrane/electrode assembly 11 was assembled into a power generation cell, and the cell voltages in the initial stage of operation were measured under the same conditions as those of Example 11. Table 1 shows the results.

### EXAMPLE 12

The catalyst layer (a) laminate prepared in Example 11 was transferred onto a gas diffusion layer made of carbon cloth having a thickness of 350 µm, that is the same as one employed in Example 11, by carrying out hot pressing at a temperature of 130°C and a pressure of 3 MPa, to produce a laminate having a construction of catalyst layer (a)/gas diffusion layer. Further, an electrolyte membrane that is the same as one employed in Example 11 was employed, and the above laminate was disposed on each side of the electrolyte membrane so that the catalyst layer (a) contacts with each side of the electrolyte membrane, and further, hot pressing was carried out at a temperature of 130°C and a pressure of 2 MPa to form a membrane/electrode assembly 12 having an electrode area of 25 cm². The construction was, in the order from the cathode side, gas diffusion layer/catalyst layer (a)/electrolyte membrane/catalyst layer (a)/gas diffusion layer.

The obtained membrane/electrode assembly 12 was assembled into a power generation cell, and the cell voltage in the initial stage of operation was measured under the same conditions as those of Example 1. Table 1 shows the results.

### EXAMPLE 13

A membrane/electrode assembly 13 was produced in the same manner as Example 1 except that the gas diffusion layer (b2) prepared in the above item 8 was employed instead of the gas diffusion layers (b1+b5). The layer construction of the membrane/electrode assembly 13 was, in the order from the cathode side, gas diffusion layer (b2)/catalyst layer (a)/electrolyte membrane/catalyst layer (a)/gas diffusion layer (b5)/gas diffusion layer (b2).

The obtained membrane/electrode assembly 13 was assembled into a power generation cell, and the cell voltages in the initial stage of operation were measured under the same conditions as those of Example 1. Table 1 shows the results.

### EXAMPLE 14

The coating fluid (b5) prepared in the above item 3 was applied on a substrate film using a die coater so that the dry film thickness became about 10 µm, and it was dried in a dryer at 80°C for 30 minutes to form a gas diffusion layer (b5).

The gas diffusion layer-coating fluid (b2) was applied on the gas diffusion layer (b5) so that the thickness of a layer containing vapor grown carbon fibers after drying became 200 µm, and it was dried in a dryer at 80°C for 30 minutes to form a gas diffusion layer (b2+b5) that is a laminate of the gas diffusion layer (b5) and the gas diffusion layer (b2). By removing the substrate, the gas diffusion layers (b2+b5) having a thickness of about 210 µm was obtained.

A membrane/electrode assembly 15 was produced, wherein the anode of the membrane/electrode assembly 2 prepared in Example 2 was used as a cathode and the cathode of the membrane/electrode assembly 2 prepared in Example 2 was used as an anode. The membrane/electrode assembly 15 has a layer structure, in the order from the anode side, gas diffusion layer (b2)/gas diffusion layer (b5)/catalyst layer (a)/electrolyte membrane/catalyst layer (a)/gas diffusion layer (b5)/gas diffusion layer (b2).

The obtained membrane/electrode assembly 14 was assembled into a power generation cell, and the cell voltages in the initial stage of operation were measured under the same conditions as those of Example 1. Table 1 shows the results.

### EXAMPLE 15

A membrane/electrode assembly 16 was produced, wherein the anode of the membrane/electrode assembly 7 prepared in Example 7 was used as a cathode and the cathode of the membrane/electrode assembly 7 prepared in Example 7 was used as an anode. The membrane/electrode assembly 16 has a layer construction, in the order from the anode side, gas diffusion layer (b2)/gas diffusion layer (b5)/catalyst layer (a)/electrolyte membrane/catalyst layer (a)/gas diffusion layer (b5)/gas diffusion layer (b2).

The obtained membrane/electrode assembly 15 was assembled into a power generation cell, and the cell voltages in the initial stage of operation were measured under the same conditions as those of Example 1. Table 1 shows the results.

### EXAMPLE 16

A membrane/electrode assembly 16 having an electrode area of 25 cm² was produced in the same manner as Example 7 except that the positions of the anode and cathode were reversed in the construction. The membrane/electrode assembly 16 has a layer construction, in the order from the anode side, gas diffusion layer (b2)/gas diffusion layer (b5)/catalyst layer (a)/electrolyte membrane/catalyst layer (a)/gas diffusion layer (b5)/gas diffusion layer (b2).

The obtained membrane/electrode assembly 16 was assembled into a power generation cell, and the cell voltages in the initial stage of operation were measured under the same conditions as those of Example 1. Table 1 shows the results.

**TABLE 1**

| Examples | Cell voltage (V) | |
|---|---|---|
| | 0.2 A/cm² | 1.5 A/cm² |
| Ex. 1 | 0.76 | 0.46 |
| Ex. 2 | 0.77 | 0.46 |
| Ex. 3 | 0.77 | 0.49 |
| Ex. 4 | 0.77 | 0.48 |
| Ex. 5 | 0.77 | 0.49 |
| Ex. 6 | 0.76 | 0.46 |
| Ex. 7 | 0.77 | 0.47 |
| Ex. 8 | 0.77 | 0.47 |
| Ex. 9 | 0.77 | 0.47 |
| Ex. 10 | 0.77 | 0.49 |
| Ex. 11 | 0.76 | 0 |
| Ex. 12 | 0.77 | 0.21 |
| Ex. 13 | 0.77 | 0.48 |
| Ex. 14 | 0.77 | 0.45 |
| Ex. 15 | 0.77 | 0.46 |
| Ex. 16 | 0.77 | 0.47 |

From the results shown in Table 1, it was confirmed that a polymer electrolyte fuel cell employing a membrane/electrode assembly produced in any one of Examples 1 to 10 and 13 to 16 showed high output voltage both in a low current density region and a high current density region.

On the other hand, in Example 11 wherein carbon cloth was bonded with a catalyst layer of each of the electrodes to form a gas diffusion layer, and in Example 12 wherein a laminate obtained by bonding a catalyst layer with a carbon cloth by hot pressing was employed as each electrode, high output voltage could not be obtained at 1.5 A/cm².

### INDUSTRIAL APPLICABILITY

By the present invention, it is possible to produce a membrane/electrode assembly for a polymer electrolyte fuel cell which can produce a high output voltage both in a low current density region and a high current density region.

Accordingly, a polymer electrolyte fuel cell employing a membrane/electrode assembly produced by the present invention, is extremely useful in various types of power source applications for e.g. stationary use or automobile use.

The entire disclosure of Japanese Patent Application No. 2008-042102 filed on February 22, 2008 including specification, claims, drawings and summary is incorporated herein by reference in its entirety.

## Claims

1. A process for producing a membrane/electrode assembly for a polymer electrolyte fuel cell, comprising an anode and a cathode each having a catalyst layer, and an electrolyte membrane interposed between the catalyst layer of the anode and the catalyst layer of the cathode;
said process comprising:
a gas diffusion layer-forming step of applying a gas diffusion layer-coating fluid containing carbon fibers having a fiber diameter of from 1 µm to 50 µm and a proton conductive polymer, on a substrate to form a gas diffusion layer;
a removal step of removing the substrate from the gas diffusion layer formed in the gas diffusion layer-forming step; and
a step of disposing at least one such a gas diffusion layer thus prepared, on a surface of the catalyst layer of at least one of the anode and the cathode, on which the electrolyte membrane is not disposed.

2. The process for producing a membrane/electrode assembly for a polymer electrolyte fuel cell according to Claim 1, wherein the gas diffusion layer is formed so that its total thickness is from 30 µm to 400 µm.

3. The process for producing a membrane/electrode assembly for a polymer electrolyte fuel cell according to Claim 1 or 2, wherein the gas diffusion layer-coating fluid contains polytetrafluoroethylene in an amount of from 1 to 30% by mass of the carbon fibers.

4. A process for producing a membrane/electrode assembly for a polymer electrolyte fuel cell comprising an anode and a cathode each having a catalyst layer, and an electrolyte membrane interposed between the catalyst layer of the anode and the catalyst layer of the cathode, wherein at least one of the anode and the cathode has a gas diffusion layer (1) and a gas diffusion layer (2);
said process comprising:
a gas diffusion layer (1)-forming step of applying a gas diffusion layer (1)-coating fluid containing carbon fibers having a fiber diameter of from 1 µm to 50 µm and a proton conductive polymer, on a substrate, to form the gas diffusion layer (1);
a removal step of removing the substrate from the gas diffusion layer (1) formed in the gas diffusion layer (1)-forming step;
a gas diffusion layer (2)-forming step of applying a gas diffusion layer (2)-coating fluid containing carbon fibers having a fiber diameter of at least 1 nm and less than 1,000 nm and a proton conductive polymer, on a surface of the gas diffusion layer (1) from which the substrate is removed, to form the gas diffusion layer (2);
a catalyst layer-forming step of applying a catalyst layer-coating fluid containing a catalyst and a proton conductive polymer, on the electrolyte membrane, to form each catalyst layer; and
a bonding step of bonding the catalyst layer formed in the catalyst layer-forming step with the gas diffusion layer (2).

5. A process for producing a membrane/electrode assembly for a polymer electrolyte fuel cell comprising an anode and a cathode each having a catalyst layer, and an electrolyte membrane interposed between the catalyst layer of the anode and the catalyst layer of the cathode, wherein at least one of the anode and the cathode has a gas diffusion layer (1) and a gas diffusion layer (2);
said process comprising:
a gas diffusion layer (2)-forming step of applying a gas diffusion layer (2)-coating fluid containing carbon fibers having a fiber diameter of at least 1 nm and less than 1,000 nm and a proton conductive polymer, on a substrate, to form the gas diffusion layer (2);
a gas diffusion layer (1)-forming step of applying a gas diffusion layer (1)-coating fluid containing carbon fibers having a fiber diameter of from 1 µm to 50 µm and a proton conductive polymer, on the gas diffusion layer (2), to form the gas diffusion layer (1);
a removal step of removing the substrate from the gas diffusion layer (2) formed in the gas diffusion layer (2)-forming step;
a catalyst layer forming step of applying a catalyst layer-coating fluid containing a catalyst and a proton conductive polymer, on the electrolyte membrane, to form each catalyst layer; and
a bonding step of bonding the catalyst layer formed in the catalyst layer-forming step with the gas diffusion layer (2).

6. The process for producing a membrane/electrode assembly for a polymer electrolyte fuel cell according to Claim 1; said polymer electrolyte fuel cell comprising an anode and a cathode each having a catalyst layer, and an electrolyte membrane interposed between the catalyst layer of the anode and the catalyst layer of the cathode, wherein at least one of the anode and the cathode has a gas diffusion layer (1) and a gas diffusion layer (2);
said process comprising:
a gas diffusion layer (1)-forming step of applying a gas diffusion layer (1)-coating fluid containing carbon fibers having a fiber diameter of from 1 µm to 50 µm and a proton conductive polymer, on a substrate, to form the gas diffusion layer (1);
a removal step of removing the substrate from the gas diffusion layer (1) formed in the gas diffusion layer (1)-forming step;
a catalyst layer-forming step of applying a catalyst layer-coating fluid containing a catalyst and a proton conductive polymer, on the electrolyte membrane, to form each catalyst layer;
a gas diffusion layer (2)-forming step of applying a gas diffusion layer (2)-coating fluid containing carbon fibers having a fiber diameter of at least 1 nm and less than 1,000 nm and a proton conductive polymer, on at least one of the catalyst layers formed in the catalyst layer-forming step, to form the gas diffusion layer (2); and
a bonding step of bonding the gas diffusion layer (1) with the gas diffusion layer (2).

7. The process for producing a membrane/electrode assembly for a polymer electrolyte fuel cell according to any one of Claims 4 to 6, wherein the gas diffusion layer (1) and the gas diffusion layer (2) are formed so that their total thickness is from 30 µm to 400 µm.

8. The process for producing a membrane/electrode assembly for a polymer electrolyte fuel cell according to any one of Claims 4 to 7, wherein the gas diffusion layer-coating fluid contains polytetrafluoroethylene in an amount of from 1 to 30% by mass of the carbon fibers.

9. The process for producing a membrane/electrode assembly for a polymer electrolyte fuel cell according to any one of Claims 1 to 8, wherein the gas diffusion layer-coating fluid contains the carbon fibers and the proton conductive polymer with a mass ratio of carbon fiber: proton conductive polymer of from 1:0.01 to 1:1.0.

10. The process for producing a membrane/electrode assembly for a polymer electrolyte fuel cell according to any one of Claims 1 to 9, wherein the proton conductive polymer is a copolymer containing a polymerizable unit based on tetrafluoroethylene and a polymerizable unit based on a perfluorovinylether having a sulfonic acid group.
